# EUROPEAN PATENT SPECIFICATION

(11) **EP 3 910 554 B1**
(45) Date of publication and mention of the grant of the patent: **10.01.2024**
(21) Application number: 20174277.2
(22) Date of filing: 12.05.2020
(51) Int. Cl.: G06K 19/06, G06K 19/077

(54) **CREDENTIAL DEVICE SECURITY**
SICHERHEIT EINER BERECHTIGUNGSNACHWEISVORRICHTUNG
SÉCURITÉ DE DISPOSITIF DE JUSTIFICATIF D'IDENTITÉ

(43) Date of publication of application: 17.11.2021
(73) Proprietor: Mastercard International Incorporated, Purchase NY 10577 (US)
(72) Inventor: PITCHER, Joseph, Wirral Merseyside CH60 2SL (GB); TIERNEY, John, Heswall Merseyside Cheshire CH60 7TF (GB); CORNESS, Deborah, Warrington Cheshire WA4 3HN (GB)
(74) Representative: Lawrence, Richard Anthony

(56) References cited:
- WO-A1-2011/095041
- WO-A1-2016/134171

## Description

### TECHNICAL FIELD

The present disclosure relates to credential device security. In embodiments, it relates to improving the security of a payment device such as a payment card.

### BACKGROUND

Credential information is provided in various forms - a passport is in a book format, whereas a driving license is typically in a credit card form factor. A credential device will typically contain information stored in a chip within the device (such as the RFID chip within a passport) along with printed information (such as the photograph of the bearer and other personal details in a driving license).

A payment card is a particular example of a credential device - it contains printed information relating to a cardholder and a cardholder account, including security information, but contains further secure information to support performance of a transaction in a chip. In order to initiate a payment transaction, a payment card can interact with a merchant's point-of-sale (POS) terminal by inserting the payment card into the POS terminal device and reading the payment data from the chip, or by swiping the payment card at the POS terminal device and reading the payment data from the magnetic stripe. Alternatively, the payment data can be manually entered at the POS terminal. As a further alternative, payment data can be read from the payment card in a contactless manner, namely by bringing the payment card into close proximity with a contactless reader at the merchant's POS terminal device.

A problem with such transaction devices is that a fraudster may be able to attempt to carry out a fraudulent payment transaction using the details that are typically visible on the front and/or rear faces of the payment card, thereby presenting an inherent security issue. Therefore, the payment card is vulnerable to copying, misuse and fraudulent behaviour. Other credential devices are subject to similar impersonation attacks. Various mechanisms can be used to secure data provided on the payment card, or to provide assurance that the payment card is genuine. For example, holograms are often used in payment cards as a security feature. Such mechanisms contribute significantly to manufacturing costs of the payment card and still run the risk that a fraudster may be able to use a subset of the information available on the payment card to initiate a transaction. A similar risk applies to other credential devices, that use of partial information may allow a malicious observer to impersonate the legitimate user of the credential device.

The present disclosure has been devised to mitigate or overcome at least some of the above-mentioned problems.

Patent document WO2016/134171 A1, describes a method for concealing sensitive information on a portable device via a steganographic image. The portable device can be in the form of a card such as a driver's license or credit card and the hidden information may include a person's name or account number. In particular, WO 2016/134171 A1 discloses a system comprising a portable device such as a card, and a mobile device such as a mobile phone. The card has a steganographic image printed on the front side of a substrate of the card and a magnetic stripe formed on back side of the card. Alternatively, a microprocessor and memory chip can replace the magnetic stripe. The printed image includes hidden information such as banking credentials such as the user's name, account number etc. The hidden information / banking credentials are also stored in the IC memory chip. There is no user-readable information shown on the card so that potential fraudsters will not be able to view the sensitive banking credentials. Only the mobile phone is capable of decoding the hidden information in the image and displaying the bank credentials. This document does not disclose at least the following features: that the credential device further comprises a hologram and a payment network logo at an overlapping position to the invisible digital watermark.

### SUMMARY OF THE DISCLOSURE

According to a first aspect of the present disclosure, there is provided a credential device comprising a substrate, a chip embedded in the substrate, the chip having first credential data installed therein, and an image printed on the substrate, wherein second credential data associated with the first credential data is encoded as an invisible digital watermark within the image printed on the substrate, and the credential device further comprises a hologram and a payment network logo at an overlapping position to the invisible digital watermark.

The second credential data may only be printed in encoded form and not in clear text on the substrate.

In embodiments, the credential device may comprise a credit card form factor.

The credential device may have a credit card form factor in accordance with ISO/IEC 7810 ID-1.

The second credential data may comprise encrypted second credential data.

The second credential data may comprise encrypted second credential data which can be decrypted only by a master key.

In embodiments, the credential device may be a payment device, the chip may have a payment application installed therein adapted to use the first credential data, and the second credential data may be credential data for an account associated with the payment device.

Optionally, the substrate may comprise a plastics material.

Optionally, the substrate may comprise a front face and a back face, and the image may be printed on the front face of the substrate.

In embodiments, the credential device may further comprise fake second credential data, which is not associated with the first credential data, printed on the substrate in clear text.

The credential device may be a payment card which does not include a signature strip, or a magnetic strip.

According to a second aspect of the present disclosure, there is provided a method of a manufacturing a credential device. The method comprises positioning a chip on a substrate, the chip having first credential data installed therein, embedding a chip in the substrate, encoding second credential data associated with the first credential data within an image, where the second credential data is encoded as an invisible digital watermark within the image printing the image on the substrate, and printing a hologram and a payment network logo at an overlapping position to the invisible digital watermark.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more embodiments of the disclosure will now be described, by way of example only, with reference to the accompanying drawings, in which:
Figure 1a is a schematic diagram showing the front face of a typical payment card, in accordance with prior art;
Figure 1b is a schematic diagram showing the back face of the typical payment card shown in Figure 1a, in accordance with prior art;
Figure 2 is a schematic diagram showing a payment transaction set up using the typical payment card shown in Figures 1a and 1b as the transaction device;
Figure 3a is a schematic diagram showing the front face of a payment card, not in accordance with the claimed invention;
Figure 3b is a schematic diagram showing the back face of the payment card shown in Figure 3a, not in accordance with the claimed invention;
Figure 3c is a schematic diagram showing a payment transaction set up using the payment card shown in Figures 3a and 3b, not in accordance with the claimed invention;
Figure 4 is a schematic diagram showing the hardware architecture of a mobile computing device;
Figure 5 is a schematic diagram showing the software architecture of a mobile computing device;
Figure 6 is a schematic diagram showing a readable payment card in accordance with a first embodiment which is not in accordance with the claimed invention;
Figure 7 is a schematic diagram showing a readable payment card in accordance with a second embodiment which is not in accordance with the claimed invention;
Figure 8 is a schematic diagram showing a readable payment card in accordance with a third embodiment which is not in accordance with the claimed invention;
Figure 9 is a schematic diagram showing a readable payment card in accordance with a fourth embodiment which is not in accordance with the claimed invention;
Figure 10 is a schematic diagram showing a readable payment card in accordance with a fifth embodiment which is not in accordance with the claimed invention;
Figure 11 is a schematic diagram showing a readable payment card in accordance with a sixth embodiment which is not in accordance with the claimed invention; and
Figure 12 is a schematic diagram showing a typical four-party model used in payment interactions between entities operating in a card scheme.

### DETAILED DESCRIPTION

The scope of protection is defined in the appended claims.

Embodiments of the disclosure may be used for a number of different types of credential device. Application to credential devices such as a driving license or an identity card will be discussed further below. Before that, embodiments will be discussed where the credential device is a transaction device, in particular a payment card used to initiate a transaction with a point of interaction such as a point of sale terminal.

### TYPICAL PAYMENT CARD AS TRANSACTION DEVICE

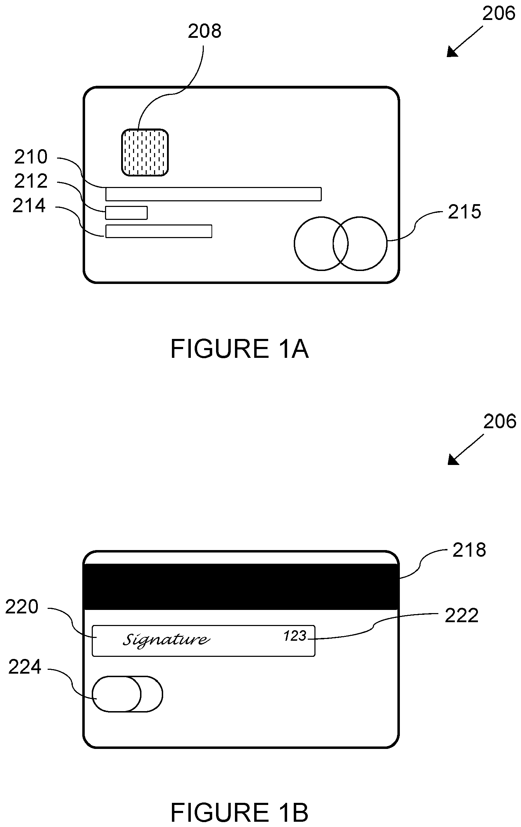

A typical payment card, in accordance with prior art, will first be described with reference to Figure 1a and Figure 1b.

The typical payment card 206 comprises a chip 208, a primary account number 210, an expiration date 212, and a cardholder name 214, all of which are normally visible on the front face of the payment card 206, as shown in Figure 1a. The payment card 206 also has a payment network logo 215 printed on the front face of the payment card 206. The payment card 206 also comprises an antenna (not shown) for securing a connection with a contactless reader in completing a contactless transaction. The payment card 206 is therefore capable of performing both contact-based and contactless transactions.

On the back face of the payment card 206, the payment card 206 comprises a magnetic stripe 218, as shown in Figure 1b. One or more cardholder verification codes are typically encoded within the magnetic stripe. The payment card 206 also has a signature strip 220 on the back face of the payment card 206. The signature strip 220 includes a printed cardholder verification code 222. Typically, there is only one cardholder verification code on the back face of the payment card. However, there may be several cardholder verification codes present on the back face of the payment card 206. For example, the payment card 206 may have a cardholder verification code encoded into the magnetic stripe 218, and a different cardholder verification code printed onto the signature panel 220 of the payment card 206. In addition, a hologram 224 is included on the back face of the payment card 206, whereby the hologram reflects light and appears animated when the payment card 206 is moved.

### SET UP USING A TYPICAL PAYMENT CARD AS TRANSACTION DEVICE

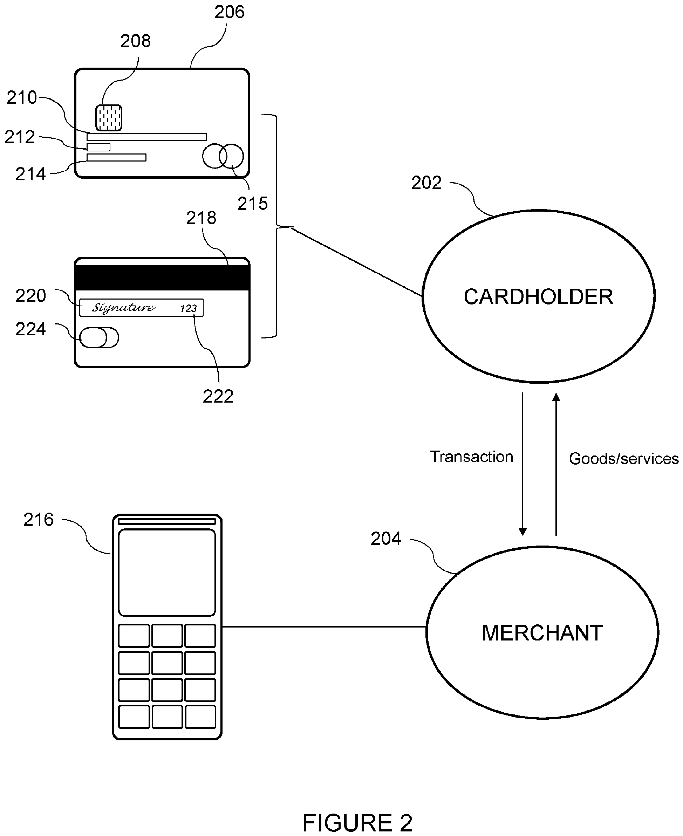

A set up using the typical payment card shown in Figures 1a and 1b, as the transaction device in a payment transaction is shown in Figure 2. Typically, the cardholder 202 initiates a purchase of goods or services from the merchant 204 using the cardholder's payment card 206.

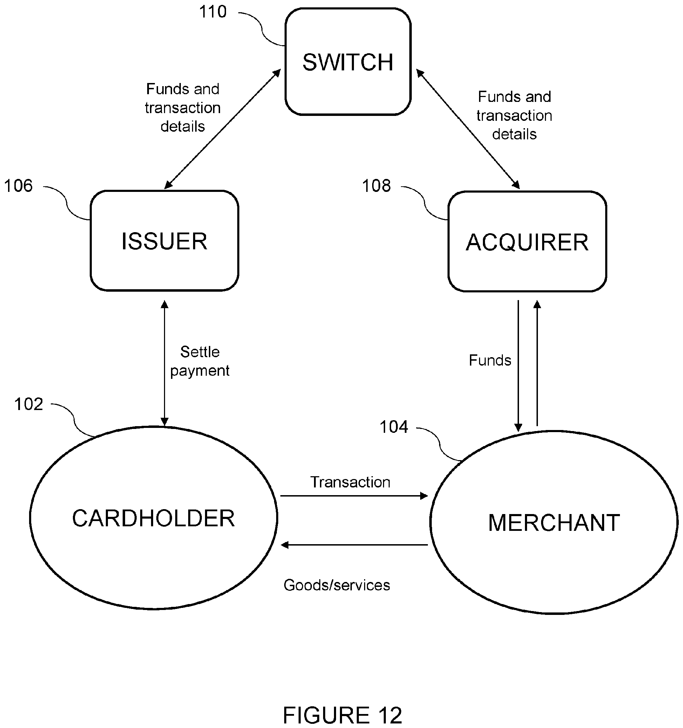

In order to initiate the purchase, the payment card 206 can interact with a merchant's point-of-sale (POS) terminal device 216 configured to read payment data from the payment card 206. Payment data can typically be read from the payment card 206 by inserting the payment card 206 into the POS terminal device 216 and reading the payment data from the chip 208, or by swiping the payment card 206 at the POS terminal device 216 and reading the payment data from the magnetic stripe. Alternatively, the primary account number 210, the expiration date 212, and the cardholder name 214 can be read by the merchant from the payment card 206 and manually entered at the POS terminal device 216. As a further alternative, the payment data can be read from the payment card 206 in a contactless manner, namely by bringing the payment card 206 into close proximity with a contactless reader at the merchant's POS terminal device 216. Details of the payment card 206 and the transaction are sent to the issuer 106 via the acquirer 108 and the switch 110, as shown in Figure 12, to authorise the transaction.

As shown in the above example, payment data such as the primary account number 210, expiration date 212, and cardholder name 214, are all visible on the front face of the payment card 206; whereas cardholder verification codes as well as a cardholder signature are often visible on the rear face of the payment card 206. A fraudster may be able to carry out a fraudulent payment transaction using the details that are typically visible on the front and/or rear faces of the payment card 206. For example, if the fraudster obtains the primary account number 210, expiration date 212, cardholder name 214, and cardholder verification code (not shown), they may be able to carry out an online payment transaction via a merchant's website without requiring consent from the cardholder. The printed payment data is readable by anyone who has physical access to the payment card 206. The printed payment data is also readable by anyone who is able to view the payment card 206 from a distance. For example, a cardholder may be holding the payment card 206 while waiting for a merchant payment card reader in a public place, e.g. restaurant, coffee shop, electronics store, and a fraudster could obtain the printed payment data by viewing the payment card 206 from an adjacent position. Therefore, the payment data that is printed on a typical payment card 206 is vulnerable to copying, misuse and fraudulent behaviour.

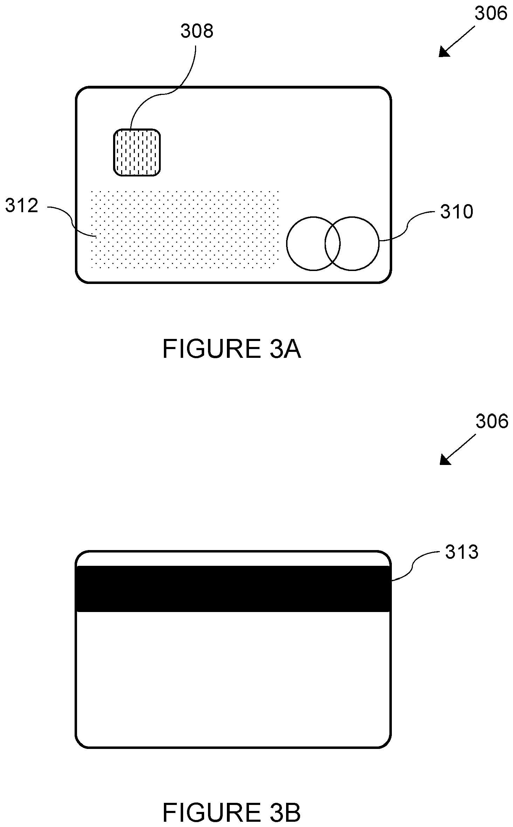

General and specific embodiments of the disclosure will be described below with reference to Figures 3a to 11.

### PAYMENT CARD IN ACCORDANCE WITH EMBODIMENTS OF THE PRESENT DISCLOSURE

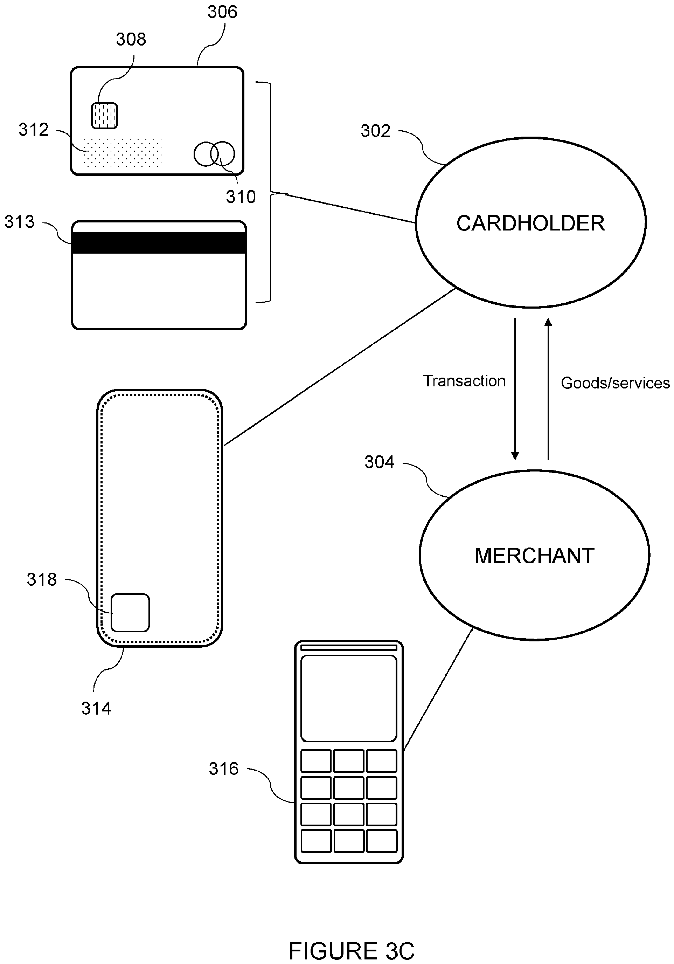

None of the embodiments illustrated in the Figures 3-12 is in accordance with the claimed invention.

A payment card, in accordance with embodiments of the present disclosure, will now be described with reference to Figure 3a and Figure 3b.

The payment card 306, which is an example of a credential device and payment device, comprises a payment chip 308 which is visible on the front face of the payment card 306. The payment card 306 comprises a substrate whereby the payment chip 308 is embedded in the substrate. The chip may be an EMV chip, thereby associated with the EMV chip specifications. The secure EMV chip provides the ability to store confidential information securely, perform processing functions and perform cryptographic processing. The chip has a first set of payment card credential data, or first credential data, installed therein. The first credential data is credential data for an account associated with the payment card. The first credential data can include, for example, the primary account number, expiration date, and cardholder name, but may extend beyond this to cryptographic keys obtained directly or indirectly from a card issuer and associated with the user account. The chip also has a payment application installed therein, the payment application being adapted to use the first credential data.

The payment card 306 further comprises a payment network logo 310 which is also visible on the front face of the payment card 306. The payment card 306 also comprises an antenna (not shown) for securing a connection with a contactless reader in completing a contactless transaction. The payment card 306 is therefore capable of performing both contact-based transactions, e.g. via the chip 308, and contactless transactions, e.g. via NFC capability.

The front face of the payment card 306 also comprises an image printed on the front face of the substrate. In some embodiments, the image may be printed on the back face of the substrate. In the present example, the image is an invisible digital watermark 312 printed on the front face of the payment card 306. The invisible digital watermark 312 is invisible to the eye, but is readable by a software application 318 or `app' installed on a smartphone 314 (the software app 318 and smartphone 314 are shown in Figure 3c and discussed in further detail below). The invisible digital watermark 312 comprises a second set of payment card credential data, or second credential data, which is associated with the first set of payment card credential data and encoded within the invisible digital watermark 312 printed on the substrate. The second credential data is credential data for an account associated with the payment card. The second credential data can include, for example, the primary account number, expiration date, cardholder name, and/or one or more cardholder verification codes. The payment data is therefore not visible on the front face of the payment card 306.

Digital watermarking technology provides a method of embedding data into digital multimedia content. Digital watermarking technology can include visible digital watermarking where visible data is embedded as the watermark, e.g. a logo or text. Digital watermarking technology can also include invisible digital watermarking where the data embedded is invisible. Embodiments of the present invention involve invisible digital watermarking. Invisible digital watermarking can be used to embed data invisibly onto the substrate of the payment card. The payment card credential data is encoded by using a data encoding algorithm. The data encoding algorithm may comprise an error correction algorithm for controlling errors in data being encoded.

In contrast to the known payment card shown in Figure 1b, the back face of the payment card 306 of the present disclosure comprises only a magnetic strip 313 and does not need to include a signature strip or a hologram. In some embodiments, as will be described in further detail below, the back face of the payment card 306 may not even include a magnetic stripe. As a further alternative, the back face of the payment card 306 may include a magnetic stripe and a signature strip, but no hologram. As yet a further alternative, the back face of the payment card 306 may include a hologram, but no magnetic stripe or signature strip.

### SET UP USING PAYMENT CARD OF EMBODIMENTS OF THE PRESENT DISCLOSURE

A set up which is suitable for implementing embodiments of the present disclosure is shown in Figure 3c. The cardholder 302 initiates a purchase of goods or services from the merchant 304 using the cardholder's payment card 306.

In order to initiate the purchase, the payment card 306 can interact with a merchant's POS terminal device 316 configured to read payment data from the payment card 306, in a similar manner to that provided above in respect of payment card 206. Namely, payment data can be read from the payment card 306 by inserting the payment card 306 into the POS terminal device 316 and reading the payment data from the chip 308, or by swiping the payment card 306 at the POS terminal device 316 and reading the payment data from the magnetic stripe 313. In some embodiments, the payment card 306 may not include a magnetic stripe on the reverse side of the payment card 306. In such embodiments, payment data can be read only from the payment card 306 in a contact-based manner only by inserting the payment card 306 into the POS terminal device 316 and reading the payment data from the chip 308.

Alternatively, the payment data can be read from the payment card 306 in order to initiate a purchase in a contactless manner, namely by bringing the payment card 306 into close proximity with a contactless reader at the merchant's POS terminal device 316. Details of the payment card 306 and the transaction are sent to the issuer 106 via the acquirer 108 and the switch 110 to authorise the transaction (see Figure 12).

The cardholder 302 may wish to obtain and view the payment data comprised within the payment card 306. A primary situation in which this may be desirable is in the event that the cardholder 302 wishes to initiate an online or remote transaction in order to purchase goods/services via a merchant's website (not shown). Another situation in which this may be desirable is in the event that a merchant's POS terminal device 316 is incapable of reading the payment data from the chip 308 or the payment card 306 using NFC.

In such situations, the invisible digital watermark 312 can be scanned by the app 318 which is installed on the cardholder's smartphone 314 to obtain the payment data, namely the primary account number, expiration date, cardholder name, and one or more cardholder verification codes. The payment data can be displayed on the user interface of the smartphone 314 and subsequently entered at the merchant's website (not shown) or the merchant's POS terminal device 316, depending on the situation.

Thus, contact-based transactions, contactless transactions, and online transactions can be carried out using payment card 306 on which no payment data is visibly printed as the payment data can be accessed via the app 318 on the cardholder's smartphone. A fraudster is thereby unable to obtain payment details by reading payment data directly from the payment card 306. Advantageously, the vulnerability of the payment data comprised within the payment card 306 to copying, misuse and fraudulent behaviour is significantly reduced. Embodiments of the present disclosure therefore improve security measures in the payment transaction field. In addition, since the amount of visibly printed data is significantly reduced, the manufacturing process is simplified which in turn enables the manufacturing process to be carried out at reduced cost. Furthermore, since the cardholder verification code is encoded into the invisible digital watermark 312, the cardholder verification code would not need to be visibly printed on the back of the card during the manufacturing process. The signature strip which would include the printed cardholder verification code on the back of a typical payment card could be removed completely. In addition, the magnetic stripe 313 which would also normally be included on the back of a typical payment card could also be removed. Advantageously, this results in reduced manufacturing costs.

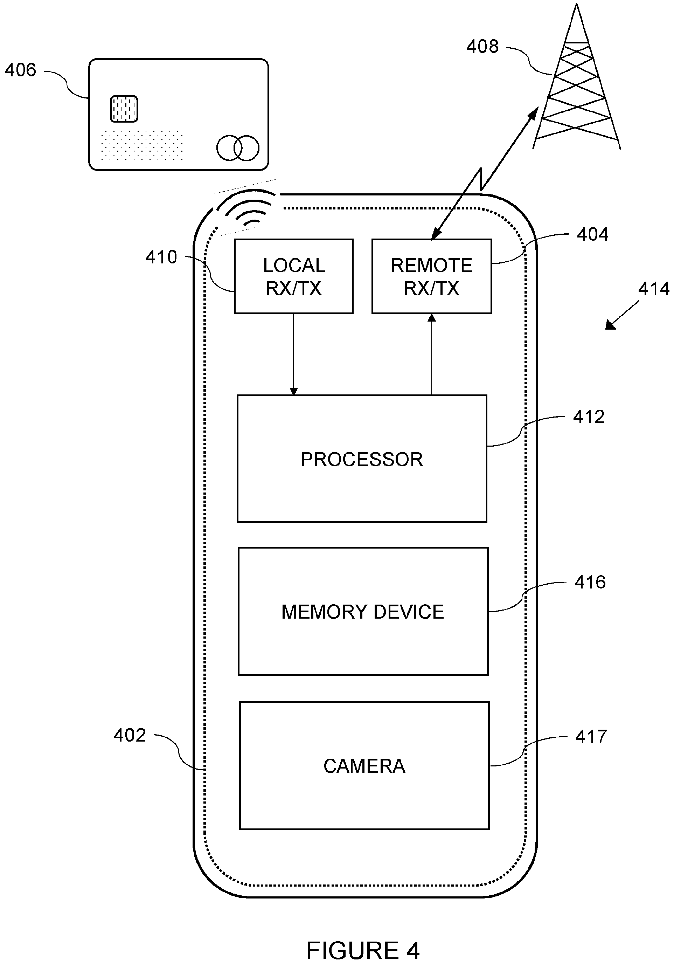

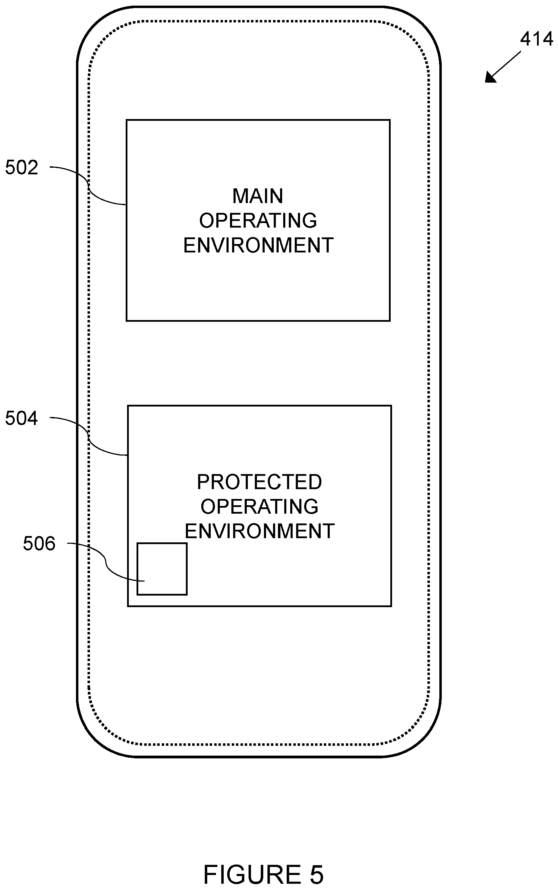

The smartphone 314 and the app 318 shown in Figure 3c are examples of hardware and software, respectively, which are suitable for use with embodiments of the present disclosure. Elements of the smartphone and the app will now be described with reference to Figure 4 and Figure 5, respectively.

### HARDWARE ARCHITECTURE OF MOBILE COMPUTING DEVICE

Figure 4 shows the hardware architecture of a smartphone 414 which is suitable for use with embodiments of the present disclosure. The term 'smartphone' may be used synonymously herein with 'mobile cellular telecommunications handset' or 'mobile phone' or 'mobile device'. Other mobile computing devices may be used instead of the smartphone 414. The mobile computing device may be another type of computing device such as a tablet or a laptop computer. The mobile computing device need not have cellular telecommunications capabilities (so long as some form of data connection, such as a Wi-Fi or Ethernet connection, is available).

In general, mobile computing devices comprising the hardware elements shown in the smartphone 414 of Figure 4 are suitable for use with embodiments of the present disclosure.

The smartphone 414 has a display 402 providing, in this example, a touchscreen user interface. The smartphone 414 is equipped with a remote wireless telecommunications apparatus comprising a remote transmitter/receiver 404 for communication with a wireless telecommunications network 408. The smartphone 414 is also equipped with a local wireless telecommunications apparatus comprising a local transmitter/receiver 410 for communication with a local transaction device such as a payment card 406. For example, the local transmitter/receiver 410 may comprise an NFC receiver to enable the smartphone 414 to receive data from a payment card 406 which is capable of transmitting data via NFC. The local transmitter/receiver 410 may also comprise an NFC transmitter for transmitting data from the smartphone 414 to a local device.

In some embodiments, the smartphone 414 has an NFC controller chip, which includes both an NFC transmitter and an NFC receiver. The NFC controller chip is configured to adhere to at least the ISO 14443 standards, and the relevant EMV or card scheme's payment or terminal application standards. The smartphone 414 further comprises a processor 412, a memory device 416, and a camera 417. The camera 417 is configured to capture image data such as an image printed on a payment card 406 of the present disclosure, e.g. digital watermark or QR code printed on the card.

### SOFTWARE ARCHITECTURE OF MOBILE COMPUTING DEVICE

Figure 5 shows the software architecture of the smartphone 414 shown in Figure 4. The software architecture has a main operating environment 502 and a protected operating environment 504.

The main operating environment 502 may be used with a generic operating system such as iOS or Android. The main operating environment 502 comprises a mobile service application. The main operating environment 502 also comprises other applications that are normally needed by such a mobile computing device, such as a browser, a modem and a camera driver (not shown).

The protected operating environment 504 may be a Subscriber Identity Module SIM, Universal Integrated Circuit Card UICC, a Secure Element or a hardware backed Trusted Execution Environment. Alternatively, there may be a sandbox or other logically protected environment in the main operating environment to provide a secure environment. This may involve using one or more external resources to provide a secure environment.

The protected operating environment 504 may comprise a mobile banking application 506 or `app' for making in-app payments or payments at POS terminals. The mobile banking application 506 can be accessed by a user of the smartphone 414. Alternatively, the elements relevant to the security of the mobile banking application 506 may be comprised in the protected operating environment. The mobile banking application 506 may be located within the SIM or within another physically or logically protected environment. Alternatively, some parts of the mobile banking application 506 may be situated in the protected operating environment. Further, data from the application 506 may be located in a protected memory.

Within the mobile banking application 506, image data which has been captured by the camera 417 is resolved in order to recover the payment card credential data comprised within the image data. The payment card credential data is thereby recovered in digital form. Alternatively, the payment card credential data may be recovered from the image data outside of the mobile banking application 506.

### READABLE PAYMENT CARD IN ACCORDANCE WITH A FIRST EXEMPLARY EMBODIMENT (not in accordance with the claimed invention)

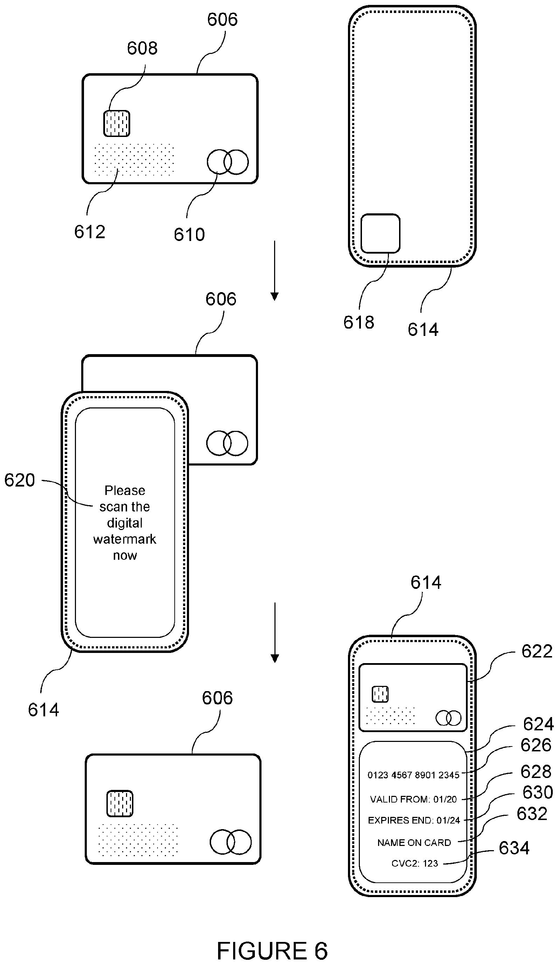

A walkthrough of reading a payment card in accordance with a first exemplary embodiment is shown in Figure 6.

The payment card 606 comprises features as set out in the above description with reference to Figures 3a to 3c. Namely, the payment card 606 comprises a chip 608, a payment network logo 610, an antenna (not shown), and an invisible digital watermark 612. On the reverse side of the payment card 606, the payment card 606 further comprises a magnetic stripe (not shown).

The invisible digital watermark 612 is invisible to the eye, but is readable by an app 618 installed on a smartphone 614. In the present embodiment, the invisible digital watermark 612 comprises unprotected encoded payment data. The invisible digital watermark 612 can be scanned by the smartphone 614 to obtain the unprotected encoded payment data comprised within the invisible digital watermark 612. The unprotected encoded data can be read by any suitable app 618 as no protection is applied to the encoded data.

In use, the user is presented with a scan request message 620 for prompting the user to scan the invisible digital watermark 612. This may be in response to a user input or user request. The app 618 is then used to scan the invisible digital watermark 612 and thus to obtain the unprotected encoded data. Once the invisible digital watermark 612 has been scanned, a payment card image 622 is shown in the app 618 to represent the payment card 606 which has been scanned, along with the payment card data 624 comprised within the unprotected encoded data. Namely, the payment data 624 comprises the primary account number 626, start date 628, expiration date 630, cardholder name 632, and a cardholder verification code 634. In some embodiments, several cardholder verification codes may be included in the payment data. The payment data 624 may also comprise the name of the issuer of the payment card 606.

The payment data 624 can be displayed on the user interface of the smartphone 614 and subsequently entered at the merchant's website.

Thus, the payment data 624 can readily be obtained using a smartphone 614 which, advantageously, eliminates the requirement for the payment data to be visibly printed on the payment card. A fraudster is thereby unable to obtain payment details by reading payment data directly from the payment card, and the vulnerability of the payment data comprised within the payment card to copying, misuse and fraudulent behaviour is significantly reduced.

### READABLE PAYMENT CARD IN ACCORDANCE WITH A SECOND EXEMPLARY EMBODIMENT (not in accordance with the claimed invention)

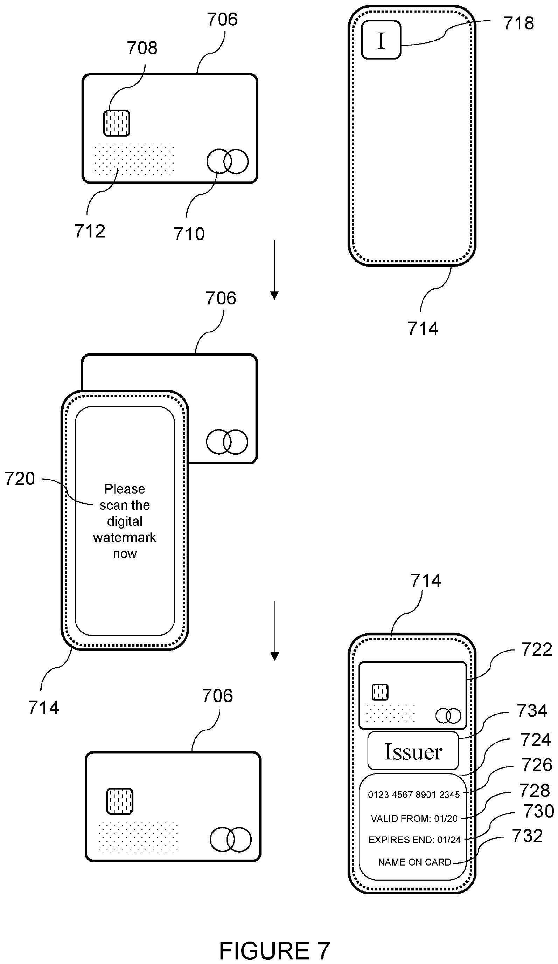

A walkthrough of reading a payment card in accordance with a second exemplary embodiment is shown in Figure 7.

The second embodiment is similar to the first embodiment, which is shown in Figure 6, and as such the following description is limited to the differences between the first and second exemplary embodiments. Common features of the first and second exemplary embodiments are labelled with analogous reference numerals. Namely, the payment card 706, the chip 708, the payment network logo 710, and the invisible digital watermark 712 are all shown in Figure 7. The payment card 706 also has an antenna (not shown), and the payment card 706 comprises a magnetic stripe (not shown) on the reverse side of the payment card 706.

In the present exemplary embodiment, the invisible digital watermark 712 comprises protected encoded payment data. The encoded payment data is protected by the issuer. The encoded data is protected by symmetric or asymmetric encryption during production of the payment card 706. The invisible digital watermark 712 can be scanned by the smartphone 714 to obtain the protected encoded payment data comprised within the invisible digital watermark 712. Since the encoded data is protected by the issuer, the protected encoded data can be read only by a valid installation of the issuer mobile banking application 718. A valid installation of the issuer mobile banking application 718 contains the issuer key required to decrypt the protected encoded data. The issuer mobile banking application 718 is thereby configured to read payment details comprised within the payment card 706 that has been issued by the issuer. The issuer mobile banking application 718 may require a consumer to successfully log in, which may include one or more consumer verification methods, before the issuer mobile banking application 718 is able to read the payment details comprised within the payment card 706.

The protected encoded payment data may include a key index. In such a case, the issuer mobile banking application 718 contains multiple issuer keys for decrypting the protected encoded data.

In use, the user of the smartphone 714 on which the issuer mobile banking application 718 is installed is presented with a scan request message 720 for prompting the user to scan the invisible digital watermark 712. For example, the present embodiment may be used by an in-branch mobile banking application which is installed on an in-branch smartphone or tablet. The issuer mobile banking app 718 is then used to scan the invisible digital watermark 712 and thus to obtain the protected encoded data. Once the invisible digital watermark 712 has been scanned, a payment card image 722 is shown in the issuer mobile banking app 718 to represent the payment card 706 which has been scanned, along with the payment data 724 comprised within the protected encoded data. Namely, the payment data 724 comprises the primary account number 726, start date 728, expiration date 730, cardholder name 732, and one or more cardholder verification codes (not shown). The issuer name 734 may be optionally shown as part of the issuer mobile banking app 718.

### READABLE PAYMENT CARD IN ACCORDANCE WITH A THIRD EXEMPLARY EMBODIMENT(not in accordance with the claimed invention)

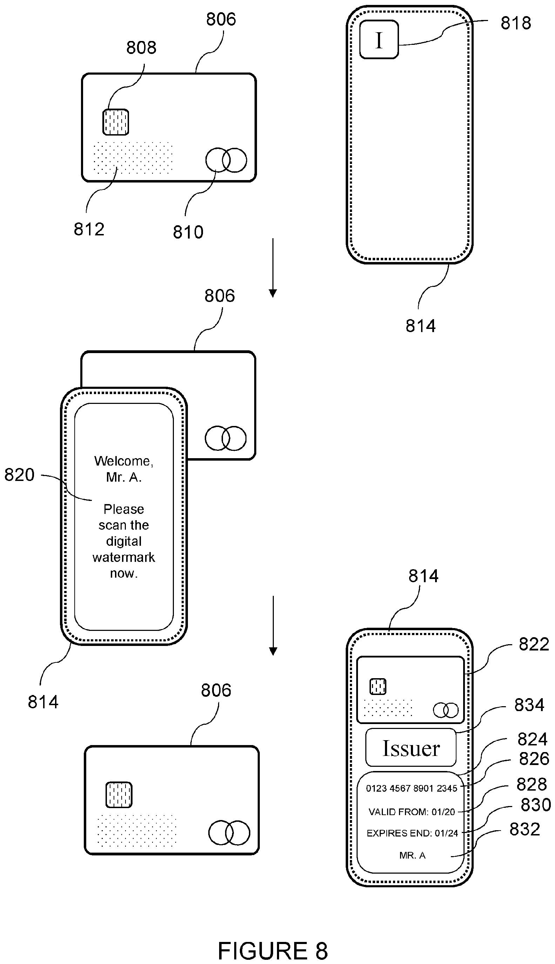

A walkthrough of reading a payment card in accordance with a third exemplary embodiment is shown in Figure 8.

The third exemplary embodiment is similar to the second embodiment, which is shown in Figure 7, and as such the following description is limited to the differences between the second and third embodiments. Common features of the second and third exemplary embodiments are labelled with analogous reference numerals. Namely, the payment card 806, the chip 808, the payment network logo 810, and the invisible digital watermark 812 are all shown in Figure 8. The payment card 806 also has an antenna (not shown). The payment card 806 has a magnetic stripe (not shown) on its back face.

In the present exemplary embodiment, the invisible digital watermark 812 comprises protected encoded payment data, whereby the encoded payment data is protected by the issuer specifically for the cardholder of the payment card 806. The encoded data is protected by symmetric encryption during production of the payment card 806. Symmetric encryption may be carried out using an issuer master key which is diversified using a suitable value stored in the encoded data. The issuer mobile banking application 818 securely stores the same issuer master key. The invisible digital watermark 812 can be scanned by the smartphone 814 to obtain the protected encoded payment data comprised within the invisible digital watermark 812. Since the encoded payment data is protected by the issuer and the issuer mobile banking application 818 securely stores the same issuer master key as used for symmetric encryption of the encoded payment data, the protected encoded data is encrypted specifically for the cardholder. The protected encoded data can be read therefore only by a specific valid installation of the issuer mobile banking application 818. The issuer mobile banking application 818 can only read the protected encoded payment data comprised within payment cards that are owned by the genuine cardholder.

The protected encoded payment data may include a key index. In such a case, the issuer mobile banking application 818 contains multiple issuer keys for decrypting the protected encoded data.

In use, the identity of the user of the smartphone 814 is verified. The smartphone 814 has a specific valid installation of the issuer mobile banking application 818. The user is prompted by a request message 820 specifically addressed to the user to scan the invisible digital watermark 812. The issuer mobile banking app 818 is then used to scan the invisible digital watermark 812 and thus to obtain the protected encoded data. Once the invisible digital watermark 812 has been scanned, a payment card image 822 is shown in the issuer mobile banking app 818 to represent the payment card 806 which has been scanned, along with the payment data 824 comprised within the protected encoded data. Namely, the payment data 824 comprises the primary account number 826, start date 828, expiration date 830, cardholder name 832, and one or more cardholder verification codes (not shown). The issuer name 834 is shown as part of the issuer mobile banking app 818.

### READABLE PAYMENT CARD IN ACCORDANCE WITH A FOURTH EXEMPLARY EMBODIMENT (not in accordance with the claimed invention)

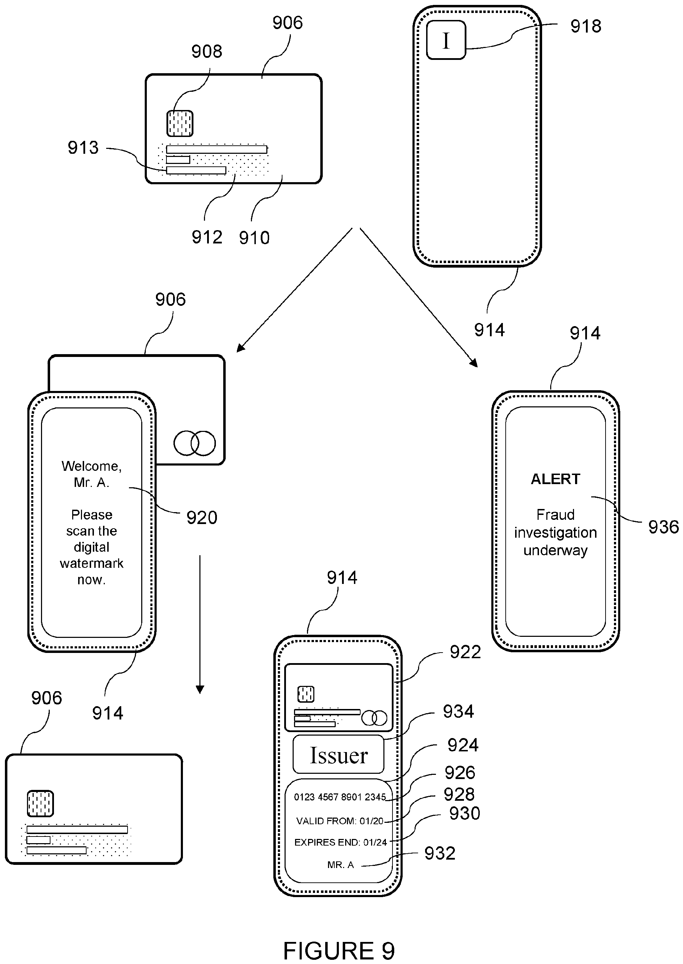

A walkthrough of reading a payment card in accordance with a fourth exemplary embodiment is shown in Figure 9.

A payment card 906 in accordance with a fourth exemplary embodiment is shown. The payment card 906 comprises a chip 908, a payment network logo 910 and an invisible digital watermark 912. The invisible digital watermark 912 includes protected encoded payment data, whereby the encoded payment data is protected by the issuer in accordance with the second embodiment described above, or by the issuer specifically for the cardholder of the payment card 906, in accordance with the third embodiment described above.

The payment card 906 further comprises a fake printed payment data 913. The fake printed payment data 913 includes a fake primary account number, a fake expiration date, and a fake cardholder name, all of which are all visible on the front side of the payment card 906. The payment card 906 also includes a fake cardholder verification code on the back face of the payment card 906. The fake printed payment data 913 is visible on the payment card 906 and appears to be valid.

In use, a valid installation of the issuer mobile banking application 918 can be used to scan the invisible digital watermark 912 and thus to obtain the protected encoded data, as described above with reference to the second and third embodiments. Namely, where the encoded data is protected by the issuer specifically for the cardholder of the payment card 906, the user may be prompted by a request message 920 specifically addressed to the user to scan the invisible digital watermark 912. The issuer mobile banking app 918 is then used to scan the invisible digital watermark 912 and thus to obtain the protected encoded data.

Once the invisible digital watermark 912 has been scanned, a payment card image 922 is shown in the issuer mobile banking app 918 to represent the payment card 906 which has been scanned, along with the payment data 924 comprised within the protected encoded data. Namely, the payment data 924 comprises the primary account number 926, start date 928, expiration date 930, cardholder name 932, and one or more cardholder verification codes (not shown). The issuer name 934 is shown as part of the issuer mobile banking app 918.

If, however, an attempt is made to use the fake printed data 913 to carry out a payment transaction, the issuer would decline the payment transaction and trigger a fraud investigation. An alert 936 may be transmitted to the user interface of the app 918 for display by the smartphone 914. The present embodiment can therefore be used to directly detect attempted fraud, which further improves the security in payment transactions.

### READABLE PAYMENT CARD IN ACCORDANCE WITH A FIFTH EXEMPLARY EMBODIMENT AND SIXTH EMBODIMENT (neither in accordance with the claimed invention)

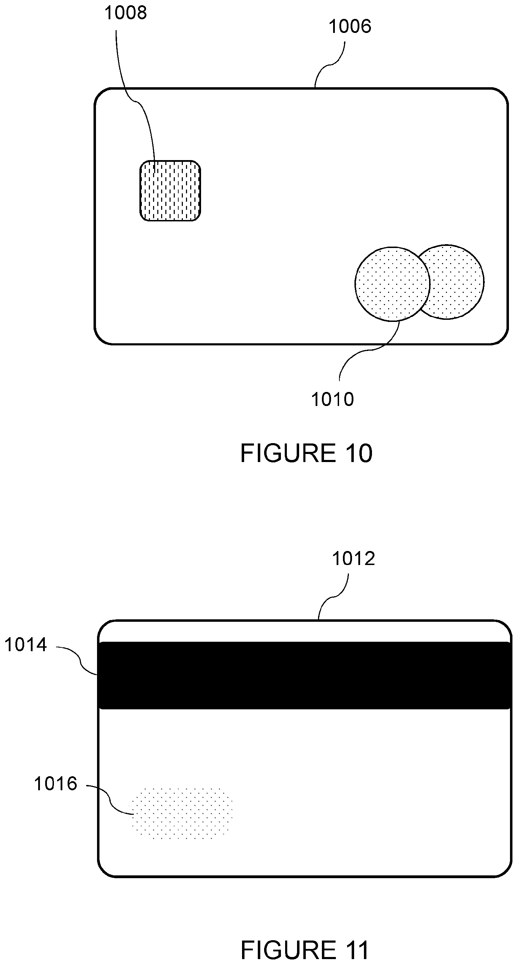

A payment card in accordance with a fifth exemplary embodiment is shown in Figure 10, and a payment card in accordance with a sixth embodiment of the present disclosure is shown in Figure 11. In both the fifth and sixth embodiments, the hologram 224 that is used in typical payment cards as shown in Figure 1b is replaced with an invisible digital watermark. A key advantage of replacing the hologram 224 used in typical payment cards with an invisible digital watermark is that this reduces manufacturing costs as the need to apply a hologram onto the payment card is eliminated.

The hologram 224 may be replaced by including an invisible digital watermark either on the front face or the back face of the payment card. Figure 10 shows an example of the hologram 224 being replaced by including an invisible digital watermark on the front face of the payment card 1006. Figure 11 shows an example of the hologram 224 being replaced by including an invisible digital watermark on the back face of the payment card 1006.

In the exemplary embodiment shown in Figure 10, the front face of the payment card 1006 includes a chip 1008 and an image of the payment network logo 1010. The image 1010 comprises an invisible digital watermark. As noted above, the invisible digital watermark comprised within the image of the payment network logo 1010 has replaced the hologram 224. The image therefore not only represents the payment network, but also contains data in an invisible digital watermark, the data being readable by the app on the smartphone. In some embodiments, the invisible digital watermark which provides a replacement of the hologram may be present at an alternative position on the front face of the payment card, for example at the position of the invisible digital watermark 312 shown in Figure 3a.

In the exemplary embodiment shown in Figure 11, the back face of the payment card 1012 includes a magnetic stripe 1014 and an invisible digital watermark 1016. The digital watermark 1016 replaces the hologram 224 used in typical payment cards as shown in Figure 1b, and thereby provides the advantage of reduced manufacturing costs.

In embodiments in accordance with the present invention, a payment card includes both an invisible digital watermark and a hologram. More precisely, the payment card includes a hologram combined with a payment network logo and an invisible digital watermark. For example, an invisible digital watermark is printed adjacent to both a translucent hologram and a payment network logo, such that the invisible digital watermark, the payment network logo and the hologram are overlapping, and both the payment network logo and the hologram can be seen at the same position on the payment card. This provides a further advantage in enabling more efficient manufacturing because the invisible digital watermark, the payment network logo and the hologram can be printed on the same face of the payment card. In addition, the invisible digital watermark, the payment network logo and the hologram can be printed at the same position on either the front face or the back face of the payment card, which would be more efficient to manufacture because it would reduce or even eliminate the need for tools during manufacture to aid in positioning the payment card.

### METHOD OF MANUFACTURING PAYMENT CARD IN ACCORDANCE WITH EMBODIMENTS OF THE PRESENT INVENTION

A method of manufacturing a payment card in accordance with embodiments of the present invention will now be described. The method comprises: positioning a chip (308) on a substrate; the chip (308) having first credential data installed therein; embedding a chip (308) in the substrate; encoding second credential data associated with the first credential data within an image (312), wherein the second credential data is encoded as an invisible digital watermark within the image (312); printing the image (312) on the substrate; and printing a hologram and a payment network logo at an overlapping position to the invisible digital watermark.

### FOUR-PARTY TRANSACTION MODEL

A typical four-party model used in payment interactions between entities operating in a card scheme is shown in Figure 12.

Normally, card schemes - payment networks linked to payment cards - are based on one of two models: a three-party model or a four-party model (adopted by Mastercard and others). For the purposes of this document, the four-party model is described in further detail below.

The four-party model may be used as a basis for the transaction network. For each transaction, the model comprises four entity types: cardholder 102, merchant 104, issuer 106 and acquirer 108. In this model, the cardholder 102 purchases goods or services from the merchant 104. The issuer 106 is the bank or any other financial institution that issued the card to the cardholder 102. The acquirer 108 provides services for card processing to the merchant 104.

The model also comprises a central switch 110 - interactions between the issuer 106 and the acquirer 108 are routed via the switch 110. The switch 110 enables a merchant 104 associated with one particular bank (acquirer 108) to accept payment transactions from a cardholder 102 associated with a different bank (issuer 106).

A typical transaction between the entities in the four-party model can be divided into three main stages: authorisation, clearing and settlement. The cardholder 102 initiates a purchase of goods or services from the merchant 104 using their payment card or other transaction device. Details of the card and the transaction are sent to the issuer 106 via the acquirer 108 and the switch 110 to authorise the transaction. Should the transaction be considered abnormal by the issuer 106, the cardholder 102 may be required to undergo a verification process to verify their identity and the details of the transaction. Once the verification process is complete the transaction is authorised.

On completion of the transaction between the cardholder 102 and the merchant 104, the transaction details are submitted by the merchant 104 to the acquirer 108 for clearing and settlement. Clearing is the process by which merchants 104 and their acquirers 108 submit the definitive list of transactions performed. Settlement is the final transfer of funds between parties. Clearing and settlement processes are typically determined by the network 110.

Separately, the issuer 106 and the cardholder 102 settle the payment amount between them. A service fee is paid to the acquirer 108 by the merchant 104 for each transaction, and an interchange fee is paid to the issuer 106 by the acquirer 108 in return for the settlement of funds.

In summary, for a typical transaction, the four-party model comprises four entity types: cardholder 102, merchant 104, issuer 106 and acquirer 108. In this model, the cardholder 102 purchases goods or services from the merchant 104. The issuer 106 is the bank or any other financial institution that issued the card to the cardholder 102. The acquirer 108 provides services for card processing to the merchant 104. In certain transaction types, other arrangements are possible - for example, transactions are possible where the issuer 106 and the acquirer 108 are the same entity, in which case no routing of the transaction between the two is required. Furthermore, it is possible to have a four-party model that works using only a single message (where the authorisation, clearing and settlement can all happen at the same time).

It is to be understood that a payment card is used in the present disclosure as a nonlimiting example of a transaction device. It should be understood that the four-party model is not limited to the use of payment cards as transaction devices. In other embodiments, the transaction device may be an alternative transaction device carrying payment data, e.g. rings, stickers, key fobs, or tags.

Embodiments of the disclosure may be used for other types of credential device, such as an identity card. In a conventional identity card device, some credential data may be stored on an RFID chip embedded in the identity card, and other credential data such as a cardholder image, name and address may be printed on the identity card. In embodiments of the disclosure, there may be nothing printed on the card itself that indicates the cardholder, or only very limited information (such as just a cardholder image), with other information either being readable by reading the RFID chip or by reading information encoded in an image printed on the identity card.

Many modifications may be made to the specific embodiments described above without departing from the scope of the invention as defined in the accompanying claims. Features of one embodiment may also be used in other embodiments, either as an addition to such embodiment or as a replacement thereof.

## Claims

1. A credential device (306) comprising:
a substrate;
a chip (308) embedded in the substrate, the chip (308) having first credential data installed therein; and
an image (312) printed on the substrate; wherein
second credential data associated with the first credential data is encoded
within the image (312) printed on the substrate; and the second credential data being encoded as an invisible digital watermark within the image (312) printed on the substrate; and wherein the credential device (306) further comprises a hologram and a payment network logo at an overlapping position to the invisible digital watermark.

2. The credential device of Claim 1, wherein the second credential data is only printed in encoded form and not in clear text on the substrate.

3. The credential device of Claim 1 or Claim 2, wherein the credential device (306) comprises a credit card form factor.

4. The credential device of Claim 3, wherein the credential device (306) has a credit card form factor in accordance with ISO/IEC 7810 ID-1.

5. The credential device of Claim 1, wherein the second credential data comprises encrypted second credential data.

6. The credential device of Claim 1, wherein the second credential data comprises encrypted second credential data which can be decrypted only by a master key.

7. The credential device of any preceding claim, wherein the credential device (306) is a payment device, the chip (308) has a payment application installed therein adapted to use the first credential data, and wherein the second credential data is credential data for an account associated with the payment device.

8. The credential device of any preceding claim, wherein the substrate comprises a plastics material.

9. The credential device of any preceding claim, wherein the substrate comprises a front face and a back face, and the image (312) is printed on the front face of the substrate.

10. The credential device of any preceding claim, further comprising fake second credential data, which is not associated with the first credential data, printed on the substrate in clear text.

11. The credential device of any preceding claim, wherein the credential device (306) is a payment card which does not include a signature strip or a magnetic strip.

12. A method of a manufacturing a credential device (306), the method comprising:
positioning a chip (308) on a substrate; the chip (308) having first credential data installed therein;
embedding a chip (308) in the substrate;
encoding second credential data associated with the first credential
data within an image (312), wherein the second credential data is encoded as an invisible digital watermark within the image (312);
printing the image (312) on the substrate; and
printing a hologram and a payment network logo at an overlapping position to the invisible digital watermark.

## Patentansprüche

1. Berechtigungsnachweisvorrichtung (306), umfassend:
ein Substrat;
einen Chip (308), der in dem Substrat eingebettet ist, wobei der Chip (308) erste darin installierte Berechtigungsnachweisdaten aufweist, und
ein Bild (312), das auf das Substrat gedruckt ist, wobei
mit den ersten Berechtigungsnachweisdaten assoziierte zweite Berechtigungsnachweisdaten in dem auf das Substrat gedruckten Bild (312) codiert sind; und die zweiten Berechtigungsnachweisdaten als unsichtbares digitales Wasserzeichen in dem auf das Substrat gedruckten Bild (312) codiert sind; und wobei die Berechtigungsnachweisvorrichtung (306) ferner ein Hologramm und ein Zahlungsnetzwerklogo an einer dem unsichtbaren digitalen Wasserzeichen überlagerten Position umfasst.

2. Berechtigungsnachweisvorrichtung nach Anspruch 1, wobei die zweiten Berechtigungsnachweisdaten nur in codierter Form und nicht in Klartext auf das Substrat gedruckt sind.

3. Berechtigungsnachweisvorrichtung nach Anspruch 1 oder Anspruch 2, wobei die Berechtigungsnachweisvorrichtung (306) einen Kreditkarten-Formfaktor umfasst.

4. Berechtigungsnachweisvorrichtung nach Anspruch 3, wobei die Berechtigungsnachweisvorrichtung (306) einen Kreditkarten-Formfaktor gemäß ISO/IEC 7810 1D-1 aufweist.

5. Berechtigungsnachweisvorrichtung nach Anspruch 1, wobei die zweiten Berechtigungsnachweisdaten verschlüsselte zweite Berechtigungsnachweisdaten umfassen.

6. Berechtigungsnachweisvorrichtung nach Anspruch 1, wobei die zweiten Berechtigungsnachweisdaten verschlüsselte zweite Berechtigungsnachweisdaten umfassen, die nur durch einen Hauptschlüssel entschlüsselt werden können.

7. Berechtigungsnachweisvorrichtung nach einem der vorangehenden Ansprüche, wobei es sich bei der Berechtigungsnachweisvorrichtung (306) um eine Zahlungsvorrichtung handelt, der Chip (308) eine darin installierte Zahlungsanwendung aufweist, die dazu angepasst ist, die ersten Berechtigungsnachweisdaten zu verwenden, und wobei es sich bei den zweiten Berechtigungsnachweisdaten um Berechtigungsnachweisdaten für ein mit der Zahlungsvorrichtung assoziiertes Konto handelt.

8. Berechtigungsnachweisvorrichtung nach einem der vorangehenden Ansprüche, wobei das Substrat einen Kunststoff umfasst.

9. Berechtigungsnachweisvorrichtung nach einem der vorangehenden Ansprüche, wobei das Substrat eine Vorderseite und eine Rückseite umfasst und das Bild (312) auf die Vorderseite des Substrats gedruckt ist.

10. Berechtigungsnachweisvorrichtung nach einem der vorangehenden Ansprüche, ferner umfassend falsche zweite Berechtigungsnachweisdaten, die nicht mit den ersten Berechtigungsnachweisdaten assoziiert sind und in Klartext auf das Substrat gedruckt sind.

11. Berechtigungsnachweisvorrichtung nach einem der vorangehenden Ansprüche, wobei es sich bei der Berechtigungsnachweisvorrichtung (306) um eine Zahlungskarte handelt, die keinen Unterschriftsstreifen oder Magnetstreifen umfasst.

12. Verfahren zum Herstellen einer Berechtigungsnachweisvorrichtung (306), wobei das Verfahren Folgendes umfasst:
Positionieren eines Chips (308) auf einem Substrat; wobei der Chip erste darin installierte Berechtigungsnachweisdaten aufweist,
Einbetten eines Chips (308) in dem Substrat;
Codieren mit den ersten Berechtigungsnachweisdaten assoziierte zweite Berechtigungsnachweisdaten in einem Bild (312), wobei die zweiten Berechtigungsnachweisdaten als unsichtbares digitales Wasserzeichen in dem Bild (312) codiert sind;
Drucken des Bilds (312) auf das Substrat; und
Drucken eines Hologramms und eines Zahlungsnetzwerklogos an einer das unsichtbare digitale Wasserzeichen überlagernden Position.

## Revendications

1. Dispositif d'authentifiant (306) comprenant :
un substrat ;
une puce (308) incorporée dans le substrat, la puce (308) ayant des premières données d'authentifiant installées en son sein ; et
une image (312) imprimée sur le substrat ; dans lequel des deuxièmes données d'authentifiant associées aux premières données d'authentifiant sont codées au sein de l'image (312) imprimée sur le substrat ; et les deuxièmes données d'authentifiant étant codées sous la forme d'un filigrane numérique invisible au sein de l'image (312) imprimée sur le substrat ; et dans lequel le dispositif d'authentifiant (306) comprend en outre un hologramme et un logo de réseau de paiement à une position chevauchante sur le filigrane numérique invisible.

2. Dispositif d'authentifiant selon la revendication 1, dans lequel les deuxièmes données d'authentifiant sont uniquement imprimées sous forme codée et non en texte clair sur le substrat.

3. Dispositif d'authentifiant selon la revendication 1 ou la revendication 2, dans lequel le dispositif d'authentifiant (306) comprend un format de carte de crédit.

4. Dispositif d'authentifiant selon la revendication 3, dans lequel le dispositif d'authentifiant (306) a un format de carte de crédit en conformité avec la norme ISO/IEC 7810 1D-1.

5. Dispositif d'authentifiant selon la revendication 1, dans lequel les deuxièmes données d'authentifiant comprennent des deuxièmes données d'authentifiant chiffrées.

6. Dispositif d'authentifiant selon la revendication 1, dans lequel les deuxièmes données d'authentifiant comprennent des deuxièmes données d'authentifiant chiffrées qui peuvent être déchiffrées uniquement par une clé passe-partout.

7. Dispositif d'authentifiant selon l'une quelconque des revendications précédentes, dans lequel le dispositif d'authentifiant (306) est un dispositif de paiement, la puce (308) a une application de paiement installée en son sein adaptée pour utiliser les premières données d'authentifiant, et dans lequel les deuxièmes données d'authentifiant sont des données d'authentifiant pour un compte associé au dispositif de paiement.

8. Dispositif d'authentifiant selon l'une quelconque des revendications précédentes, dans lequel le substrat comprend une matière plastique.

9. Dispositif d'authentifiant selon l'une quelconque des revendications précédentes, dans lequel le substrat comprend une face avant et une face arrière, et l'image (312) est imprimée sur la face avant du substrat.

10. Dispositif d'authentifiant selon l'une quelconque des revendications précédentes, comprenant en outre de fausses deuxièmes données d'authentifiant, qui ne sont pas associées aux premières données d'authentifiant, imprimées sur le substrat en texte clair.

11. Dispositif d'authentifiant selon l'une quelconque des revendications précédentes, dans lequel le dispositif d'authentifiant (306) est une carte de paiement qui ne comporte pas de bande de signature ou de bande magnétique.

12. Procédé de fabrication d'un dispositif d'authentifiant (306), le procédé comprenant :
le positionnement d'une puce (308) sur un substrat ; la puce (308) ayant des premières données d'authentifiant installées en son sein ;
l'incorporation d'une puce (308) dans le substrat ;
le codage de deuxièmes données d'authentifiant associées aux premières données d'authentifiant au sein d'une image (312), dans lequel les deuxièmes données d'authentifiant sont codées sous la forme d'un filigrane numérique invisible au sein de l'image (312) ;
l'impression de l'image (312) sur le substrat ; et
l'impression d'un hologramme et d'un logo de réseau de paiement à une position chevauchante sur le filigrane numérique invisible.
